# EUROPEAN PATENT SPECIFICATION

(11) **EP 3 709 111 B1**
(45) Date of publication and mention of the grant of the patent: **16.08.2023**
(21) Application number: 19213101.9
(22) Date of filing: 03.12.2019
(51) Int. Cl.: G05B 19/418

(54) **INTEGRATED MANAGEMENT SYSTEM FOR PRODUCTION HISTORY OF CONCRETE PRODUCT**
INTEGRIERTES MANAGEMENTSYSTEM FÜR FERTIGUNGSVERLAUF EINES BETONPRODUKTS
SYSTÈME DE GESTION INTÉGRÉ POUR L'HISTORIQUE DE LA PRODUCTION D'UN PRODUIT EN BÉTON

(30) Priority: 14.03.2019 KR 20190029080; 17.10.2019 KR 20190129357
(43) Date of publication of application: 16.09.2020
(73) Proprietor: Lee, Hi-Man, Gyeongsangbuk-do 37591 (KR); Samjung Industries Co., Ltd., Gyeongsangbuk-do 37518 (KR)
(72) Inventor: Lee, Hi-Man, 37591 Gyeongsangbuk-do (KR)
(74) Representative: Petraz, Gilberto Luigi

(56) References cited:
- US-A1- 2017 016 874
- US-A1- 2018 284 741

## Description

### BACKGROUND OF THE INVENTION

### Field of the Invention

The present invention relates to an integrated management system for production history of a concrete product. More particularly, the present invention relates to an integrated management system for production history of a concrete product, the system being capable of: dividing all production processes from aggregate that is raw material to a complete concrete product such as concrete blocks; providing information required for each process and measurement values to a manager and an operator by using generic technologies such as ICT, IoT, AI, etc. so that the manager and the operator reflect the information and the measurement values in the production processes in real time; and integrally managing and analyzing the information and the measurement values so as to continuously produce concrete products having high quality.

### Description of the Related Art

Generally, concrete products are important materials constituting the structure of buildings and roads. A production process of such concrete products includes: an aggregate process of cleaning, drying, and sorting aggregate that is raw material; an aggregate mixing process of determining a mixing ratio of the aggregate according to a feature of the product to be produced; a molding process of inserting an aggregate mixture into a metal frame, and applying high vibration and pressure; a curing process of curing the concrete product output from the molding process under constant temperature and humidity, and time; and a packing process of packing the completed concrete product output from the curing process.

Quality of such a concrete product significantly varies according to moisture content, viscosity, salinity, temperature, and humidity of aggregates that become raw materials, that is, pebbles, sand, cement, etc.

In addition, a molding condition such as vibration, pressure, etc. in the molding process, a curing condition such as temperature, humidity, etc. in the curing process, a state condition of a concrete molding board used in the molding process and the curing process are also major factors that determine quality of the concrete product.

Accordingly, in order to continuously produce concrete products having high quality, the factors affecting the quality of the concrete product as described above and history of the entire production process of the concrete product must be managed. However, conventional history management consists of simply checking some samples of the concrete products after the molding and curing processes.

As a conventional method for solving the above problem, Korean Patent Nos. 10-1091870 and 10-1624464 respectively disclose a concrete curing management system and a concrete quality management method. However, the above conventional methods determine whether or not a product has a defect during a curing process by using temperature data or temperature and time data in a concrete curing process, and determine whether or not a product has a defect in a curing. Accordingly, the above methods are not applied for all production processes of the concrete product.

US 2017/016874 discloses a measuring device embedded in a section of concrete at a location at a construction site, and adapted to obtain a measurement of a first characteristic of the concrete, which may be temperature, humidity, conductivity, impedance, salinity or the like. The measurement data are transferred to a local wireless gateway and then transmitted to a processor, which generates a predicted second characteristic of the section of concrete based on the measurement data. Such second characteristic may be strength, slump, age, maturity of the concrete, or the like.

US 2018/284741 discloses a system for data collection in an industrial production environment, the system including a data acquisition circuit structured to interpret a plurality of detection values, each said value corresponding to an input received from a corresponding sensor of a detection package, each sensor being coupled to at least one of a plurality of components of an industrial production process. The system also comprises a data analysis circuit for analyzing the values to determine a sensor performance value of the sensors, and an analysis response circuit for adjusting a sensor scaling value or a sensor sampling frequency value, in response to the sensor performance value.

Accordingly, there is required a new system capable of managing history of all production processes of a concrete product so as to continuously produce concrete products having high quality, at the same time, continuously improve quality and productivity of the concrete products by using accumulated data.

The foregoing is intended merely to aid in the understanding of the background of the present invention, and is not intended to mean that the present invention falls within the purview of the related art that is already known to those skilled in the art.

### Documents of Related Art

(Patent Document 1) Korean Patent No. 10-1091870 (Date of publication, December 12, 2011)
(Patent Document 2) Korean Patent No 10-1624464 (Date of publication, May 26, 2016)

### SUMMARY OF THE INVENTION

Accordingly, the present invention has been made keeping in mind the above problems occurring in the related art, and an objective of the present invention is to provide an integrated management system for production history of a concrete product, the system being capable of: dividing all production processes from aggregate that is raw material to a complete concrete product; providing information required for each process and measurement values to the manager and the operator by using generic technologies such as ICT, IoT, AI, etc. so that the manager and the operator reflect the information and the measurement values in the production processes in real time; and integrally managing and analyzing the information and the measurement values so as to continuously produce concrete products having high quality.

In addition, another objective of the present invention is to provide an integrated management system for production history of a concrete product, the system being capable of: storing in real time information measured and collected in all production processes of the concrete product; forming the stored information into big data, and autonomously performing learning through comparison and analysis so as to estimate and determining an error or abnormal situation occurring in production processes such that product quality and productivity are continuously improved.

In addition, still another objective of the present invention is to provide an integrated management system for production history of a concrete product, the system being capable of performing post-management of the concrete product that has been shipped or delivered by attaching an RFID chip including production history information of the concrete product individually or bundled in the packing process.

Accordingly, the present invention has been made keeping in mind the above problems occurring in the related art, and an objective of the present invention is to provide an integrated management system for production history of a concrete product as recited in claim 1, wherein the system integrally manages all production processes of the concrete product which include an aggregate process, an aggregate mixing process, a molding process, a curing process, and a packing process, the system including: a measurement unit measuring a state of a concrete product and a concrete molding board, for which the aggregate process, molding process, or curing process is performed, or a state of a production line in each process; a wireless transmitting/receiving unit receiving measurement values measured by the measurement unit, and transmitting the received measurement values to a main server and a user terminal; a main server storing the measurement values received through the wireless transmitting/receiving unit and production information of the concrete product, and controlling each production process according to the measurement values, at the same time, determining whether or not the production line is in normal operation; and a user terminal receiving the measurement values of each production process through communication with the wireless transmitting/receiving unit and the main server, and transmitting a control command of each production process to the main server. The main server further includes a memory apparatus for receiving the measurement values measured by the measurement unit and the production information of the concrete product, and storing the received measurement values and the production information; a display device displaying for receiving the measurement values measured by the measurement unit, a process command in each process input through the user terminal, and data analyzed in a data analysis device, and displaying the received measurement values, the input process command and the analyzed data; a control device controlling works performed in each production process; a communication device performing communication with the wireless transmitting/receiving unit and the user terminal; and a data analysis device analyzing the measurement values measured by the measurement unit.

The measurement unit includes an integrated sensor module where multiple independent sensors are integrated by using a Beacon technology.

The integrated sensor module includes: a first sensor module measuring compositions contained in aggregate in the aggregate process; a second sensor module measuring a state within a mixing apparatus in the aggregate mixing process; and a third sensor module installed in a concrete molding board, measuring an internal condition of a molding apparatus in the molding process and an internal condition of a curing room in the curing process, and measuring a weight of the concrete product after the molding process and the curing process.

The measurement unit further includes: a first image capturing device capturing an image of a concrete molding board input to a molding apparatus in the molding process; a second image capturing device capturing an image of the concrete product output from the molding apparatus; and a third image capturing device capturing an image of the concrete product output after the curing process.

The memory apparatus includes: a first database for storing measurement values measured in the aggregate process; a second database for storing measurement values measured in the aggregate mixing process; a third database for storing measurement values measured in the molding process; a fourth database for storing measurement values measured in the curing process; and a fifth database for storing data analyzed by the data analysis device.

Herein, the first sensor module may include a humidity sensor, a chloride ion sensor, an image sensor, and a pH sensor.

In addition, the second sensor module may include a temperature sensor and a humidity sensor.

In addition, the third sensor module may include a vibration sensor, a pressure sensor, a temperature sensor, a humidity sensor, a weight sensor, and a position sensor.

In addition, wherein each of the first to third image capturing devices includes a laser irradiating part.

In addition, the memory apparatus may further include: a sixth database for storing optimum data selected from data stored in the fifth database.

In addition, the data analysis device may include: a first analysis unit analyzing data stored in the first and second databases so as to determine works of the aggregate process and the aggregate mixing process; a second analysis unit analyzing data stored in the third and fourth databases so as to determine whether or not a concrete molding board is normal; and a third analysis unit analyzing data stored in the third and fourth databases so as to determine whether or not the concrete product after the molding process and the curing process has a defect.

In addition, the data analysis device may further include: a fourth analysis unit analyzing the measurement values measured by the measurement unit so as to determine whether or not an error occurs in a production line of each production process.

In addition, the third analysis unit may determine whether or not the concrete product has a defect by analyzing a size, a strength value, a density, and compositions of the concrete product.

Herein, the strength value and the density of the concrete product may be estimated by using a ratio between a total volume of the concrete product and a volume of cavities formed in the concrete product.

In addition, the compositions of the concrete product may be analyzed by performing spectroscopic analysis using a laser irradiating the concrete product.

In addition, the system may further include an RFID chip attached on the concrete product in the packing process. Herein, production information of the concrete product which is stored in the RFID chip may be stored in the main server.

According to the present invention, problems that may occur in each production process of the concrete product are identified in real time by storing information measured and collected in each process, at the same time, enabling the manager and the operator to check the information through wired/wireless communication. In addition, the manager and the operator issue a process command in real time according the information, and thus building an effective process line, while at the same time minimizing the defect rate can be obtained.

In addition, according to the present invention, information measured and collected in all production processes of the concrete product is stored in real time so as to form big data, autonomous learning is performed through comparison and analysis so as to estimate and determine an error or abnormal situation occurring in production processes. Accordingly, product quality and productivity can be continuously improved.

In addition, according to the present invention, an RFID chip including production history information of the concrete product is attached individually or bundled in the packing process, and thus post-management of the concrete product that has been shipped or delivered can be available.

### BRIEF DESCRIPTION OF THE DRAWINGS

The above and other objects, features and other advantages of the present invention will be more clearly understood from the following detailed description when taken in conjunction with the accompanying drawings, in which:
FIG. 1 is a view schematically showing an integrated management system for production history of concrete product according to the present invention;
FIG. 2 is a view conceptually showing an integrated management system for production history of concrete product according to the present invention;
FIG. 3 is a view conceptually showing an aggregate process according to the present invention shown in FIG. 1;
FIG. 4 is a view conceptually showing an aggregate mixing process according to the present invention shown in FIG. 1;
FIG. 5 is a view conceptually showing a molding process according to the present invention shown in FIG. 1;
FIG. 6 is a view conceptually showing a curing process according to the present invention shown in FIG. 1;
FIG. 7 is a view conceptually showing a packing process according to the present invention shown in FIG. 1; and
FIGS. 8 and 9 are views conceptually showing a usage state of a concrete molding board applied to the present invention.

### DETAILED DESCRIPTION OF THE INVENTION

Hereinafter, exemplary embodiments of an integrated management system for production history of concrete product according to the present invention will be described in detail with reference to the accompanying drawings.

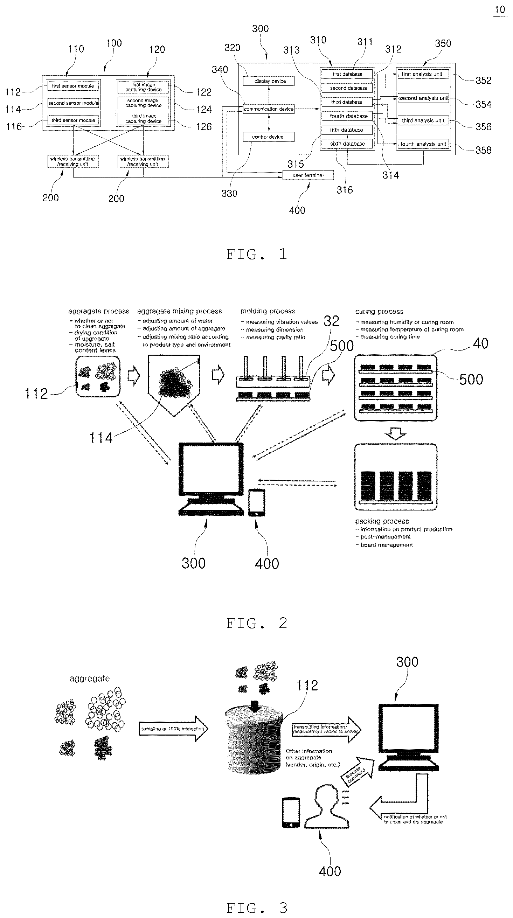

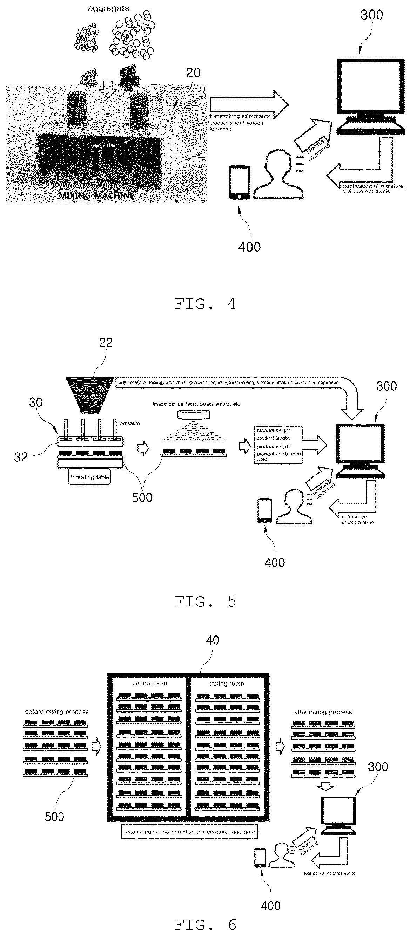

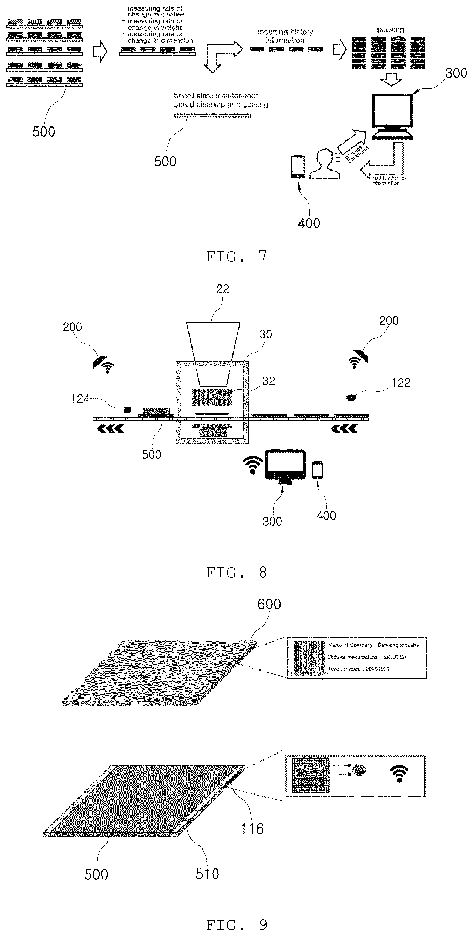

FIG. 1 is a view schematically showing an integrated management system for production history of concrete product according to the present invention, FIG. 2 is a view conceptually showing an integrated management system for production history of concrete product according to the present invention, FIG. 3 is a view conceptually showing an aggregate process according to the present invention shown in FIG. 1, FIG. 4 is a view conceptually showing an aggregate mixing process according to the present invention shown in FIG. 1, FIG. 5 is a view conceptually showing a molding process according to the present invention shown in FIG. 1, FIG. 6 is a view conceptually showing a curing process according to the present invention shown in FIG. 1, FIG. 7 is a view conceptually showing a packing process according to the present invention shown in FIG. 1, and FIGS. 8 and 9 are views conceptually showing a usage state of a concrete molding board applied to the present invention.

The present invention relates to an integrated management system 10 for production history of a concrete product (hereinafter, referred to as "integrated management system 10"), the system being capable of: dividing all production processes from aggregate that is raw material to a complete concrete product such as concrete blocks; providing information required for each process and measurement values to the manager and the operator by using generic technologies such as ICT, IoT, AI, etc. so that the manager and the operator reflect the information and the measurement values in the production process in real time; and integrally managing and analyzing the information and the measurement values so as to continuously produce concrete product having high quality. The system includes, as shown in FIGS. 1 and 2, a measurement unit 100, a wireless transmitting/receiving unit 200, a main server 300, and a user terminal 400.

In other words, in the integrated management system 10 according to the present invention, the measurement unit 100 measuring information which is required for each process, and measuring a work state may be installed all production processes of a concrete product. In addition, measurement values measured by the measurement unit 100, that is, information and work states, may be transmitted to the main server 300 and the user terminal 400 through the wireless transmitting/receiving unit 200 so that an operator or manager may check the same. Therefore, all production processes of the concrete product can be recorded and controlled. Production processes of the concrete product to which the present invention is applied include: an aggregate process, an aggregate mixing process, a molding process, a curing process, and a packing process.

First, the measurement unit 100 measures a state of a concrete product of an aggregate process, a molding process or a curing process, or measures a state of a production line, and includes an integrated sensor module 110 and an image capturing means 120.

In detail, the integrated sensor module 110 is one module where multiple independent sensors are integrated that performs wireless communication by using a Beacon technology. In other words, in order to integrally manage production history of a concrete product, multiple factors determining quality of the concrete product such as temperature, humidity, salinity, pH level, etc. have to be measured for each process. However, practically, measuring the multiple factors by independently installing sensors in each process is not easy, and thus the integrated sensor module 110 where multiple independent sensors are integrated into one module is installed in each process.

In the present invention, first to third sensor modules 112, 114, and 116 are used as the integrated sensor module 110. The first and second sensor modules 112 and 114 are respectively used for an aggregate process and an aggregate mixing process, and the third sensor module 116 is installed in a concrete molding board 500 that will be described later (hereinafter, referred to as "board 500") and used for a molding process and a curing process. A detail description thereof will be described later.

Subsequently, the image capturing means 120 captures an image of an ongoing state of each process or an image of a concrete product after a molding or curing process, and an image of a state of the board 500 used in the molding and curing processes so as to transmit the captured image to the main server 300 or user terminal 400 such that the operator or manager checks in real time an ongoing state of production processes of the concrete product or a state of the concrete product and the board 500. The image capturing means 120 includes first to third image capturing devices 122, 124, and 126.

First, the first image capturing device 122 is for capturing images of the board 500, and at least one first image capturing device 122 is installed in an upper part of a conveyor that transfers the board 500 to a molding apparatus so as to capture an image of the board 500 input to the molding apparatus such that the operator or manager checks a state of the board 500.

Subsequently, at least one second image capturing device 124 is installed on an upper part of a conveyor transferring a concrete product output from a molding process so as to capture an image of the concrete product after the molding process, and at least one third image capturing device 126 is installed in an upper part of a conveyor transferring a concrete product after a curing process so as to capture an image the concrete product after the curing process. Therefore, all of the image capturing devices are used for inspecting quality of the concrete product.

In other words, the second and third image capturing devices 124 and 126 capture images of the concrete product after the molding process and the curing process, and transmit, directly or through the wireless transmitting/receiving unit 200, the captured images to the main server 300 and the user terminal 400 such that the operator or manager checks in real time whether or not the concrete product has a defect.

Herein, each of the first to third image capturing devices 122, 124, and 126 includes a laser irradiating part (not shown) so as to measure in detail a shape, a weight, a strength value, etc. of the board 500 and a concrete product by using a laser that is emitted from the laser irradiating parts, at the same time, to determine hazardous substances such as oil, pH, salt, etc. levels included in the concrete product by performing spectrum analysis. A detailed description thereof will be described later.

Subsequently, at least one wireless transmitting/receiving unit 200 is installed within a workplace so as to receive measurement values measured by the measurement unit 100, and to transmit the received values to the main server 300 and the user terminal 400. For the same, a device capable of performing wireless communication such as WiFi, Bluetooth, etc. may be used.

Subsequently, the main server 300 stores measurement values, which are measured by the measurement unit 100, received through the wireless transmitting/receiving unit 200, analyzes the measurement values, and integrally controls and manages works performed in each process, at the same time, determines whether or not a production line of each process is in normal operation.

In addition, the main server 300 builds the measurement values stored in a storage unit into big data, and autonomously performs learning by using information of big data so as to determine a situation occurring in a production line of the concrete product, at the same time, to predict a situation that might happen in the future. The above determination result and prediction result are transmitted to the user terminal 400 by performing wireless communication such that the operators proceed the production lines according to the results of the main server 300.

The function of the main server 300 as described above may be employed by using ICT (information & communication technology), IoT (Internet of Things), AI (artificial intelligence), etc. based technology. Accordingly, the operators check in real time information provided from the main server 300 and issue process commands.

In addition, the measurement values stored in the storage unit and information of big data obtained from the measurement value are separately stored by using a cloud service such that the operators conveniently use information required in each process by using their user terminals 400, at the same time, maintenance costs are reduced.

In detail, the main server 300 includes a memory apparatus 310, a display device 320, a control device 330, a communication device 340, and a data analysis device 350. First, the memory apparatus 310 is for receiving measurement values of each process which is measured by measurement unit 100 and storing the same, and includes first to fifth databases 311, 312, 313, 314, and 315.

In other words, the first to fourth databases 311, 312, 313, and 314 are for storing measurement values measured in an aggregate process, an aggregate mixing process, a molding process, and a curing process, respectively, and the fifth database 315 is for storing data that is analyzed in the data analysis device 350 of the main server 300 which will be described later.

Herein, measurement values and data which are stored in the first to fifth databases 311, 312, 313, 314, and 315 will be described later.

Subsequently, the display device 320 is for displaying measurement values which are measured and transmitted by the measurement unit 100, and displays the measurement values over time in a graph form or displays images captured by the first to third image capturing devices 122, 124, and 126.

In addition, the display device 320 displays a process command input through the user terminal 400, or data analyzed in the data analysis device 350 which will be described later.

Subsequently, the control device 330 controls works performed in each process. When the manager or operator inputs a process command by using the user terminal 400 that will be described later, the control device 330 receives the input process command, and controls and manages works performed in each process.

Subsequently, the communication device 340 performs wired or wireless communication for the main server 300, and used for performing wired/wireless communication with the measurement unit 100, the wireless transmitting/receiving unit 200, and the user terminal 400.

In other words, the communication device 340 enables the main server 300 to receive, directly or the through wireless transmitting/receiving unit 200, measurement values measured by the measurement unit 100 in each process, and to provide measurement values received in the main server 300 and data requested from the user terminal 400 to the user terminal 400 through wireless communication, at the same time, receive a process command input by the manager or operator through the user terminal 400.

Subsequently, the data analysis device 350 analyzes measurement values measured by the measurement unit 100 and data stored in the memory apparatus 310. Resulting contents analyzed by the data analysis device 350 are applied to a production process of a current or future concrete product.

In detail, the data analysis device 350 includes first to third analysis unit 352, 354, and 356, the first analysis unit 352 determines works to be performed in an aggregate process and an aggregate mixing process by analyzing measurement values measured in the aggregate process and the aggregate mixing process, that is, data stored in the first and second databases 311 and 312.

In other words, as will be described later, in the aggregate process, moisture, salt, foreign substances, acid content, etc. levels for each aggregate which affect quality of the concrete product are measured through the measurement unit 100, that is, the first sensor module 112. In addition, the first analysis unit 352 analyzes the above measurement results so that the operator or manager determines whether or not to clean the aggregate, a method of drying the aggregate, etc. on the basis of the analysis result.

In addition, aggregate, cement, and water are mixed in the aggregate mixing process, and a mixing ratio varies according to the composition content, temperature and humidity of the aggregate. Accordingly, the measurement unit 100, that is, the second sensor module 114, measures temperature and humidity values within a mixing device 20 where aggregate, cement, and water are mixed. Then, the first analysis unit 352 synthetically analyzes measurement values measured by the second sensor module 114, and measurement values of the aggregate which are measured by the first sensor module 112 so as to provide to the operator or manager. Accordingly, the operator or manager determines a mixing ratio between aggregate, cement, and water which are input to the mixing device 20 on the basis of the analysis result.

Meanwhile, process commands of the operator or manager which are determined on the basis of the analysis result of the first analysis unit 352 are transmitted to the main server 300 through the user terminal 400 so as to be reflected on works of each process by the control device 330, at the same time stored in the first and second databases 311 and 312. Herein, when data stored in the first and second databases 311 and 312 is sufficiently accumulated to form big data, the first analysis unit 352 autonomously determines whether or not to clean the aggregate and a method of drying the aggregate in an aggregate process, and determines a mixing ratio between aggregate, cement, and water in an aggregate mixing process by analyzing big data. Accordingly, the control device 330 controls works of each process according to the determination result of the first analysis unit 352 regardless of process commands of the operator or manager.

Subsequently, the second analysis unit 354 is for determining whether or not the board 500 is normal, and determines whether or not the board 500 is normal by using data stored in the third and fourth databases 313 and 314, that is, data related to shapes of the board 500 in a molding process which are captured by the first image capturing device 122 and stored in the third database 313, and using data related to shapes of the board 500 in a curing process which are captured in the third image capturing device 126 and stored in the fourth database 314.

In other words, the board 500 is a product essentially used for continuous mass production of concrete products. Primarily, the board 500 is disposed on the bottom of a mold of a concrete molding device 30 as a lower mold when filling concrete mortar in the mold including upper and lower holes to produce concrete products such as bricks, and to transfer vibration of the molding device 30 to the concrete product. Secondarily, the board 500 is for transferring the concrete product output from the molding process to a curing room 40, and used as a pallet used for transferring the product after the curing process.

Checking a shape and an appearance of the board 500 is essential for producing concrete products having high quality for cases where a shape of the board 500 is deformed so that vibration in a molding process is not transferred uniformly to the concrete product, and thus producing concrete products having high quality become difficult, or where corrosion or scratch occurs on a surface of the board 500, a surface attached to the board 500 becomes torn off when separating the concrete product from the board 500 after the curing process, and thus there is a high probability that a defect occurs in the concrete product. Accordingly, the present invention is configured to check whether or not the board 500 is normal through the second analysis unit 354.

As will be described later, when it is determined that the board 500 is abnormal by the second analysis unit 354, a process of cleaning, coating, calibration, etc. is performed for the board 500.

Subsequently, the third analysis unit 356 is for determining whether or not a concrete product has a defect after a molding process and a curing process. Similarly, the third analysis unit 356 determines whether or not a concrete product has a defect by using measurement values of the molding process and the curing process which are stored in the third and fourth databases 313 and 314.

In detail, the third analysis unit 356 synthetically analyzes a size, a weight, a strength value, a density, compositions, etc. of a concrete product so as to determine whether or not the concrete product has a defect. In the third and fourth databases 313 and 314, a reference value and an error range after a molding process, and a reference value and an error range after a curing process are recorded for each concrete product type, and thus the third analysis unit 356 determines whether or not the concrete product has a defect by comparing the values with analysis results of the third analysis unit 356.

Herein, similarly, when data stored in the third and fourth databases 313 and 314 is sufficiently accumulated to form big data, the reference values and the error ranges are updated by the analysis results repeatedly performed by the third analysis unit 356.

First, whether or not a product size is normal is determined by determining whether or not the product size is present within an error range by comparing image data of the product respectively captured by the second and third image capturing devices 124 and 126 in a molding process and a curing process with a prestored normal product size.

In addition, whether or not a weight of a concrete product is normal is determined by comparing measurement values measured by the third sensor module 116 installed in board 500 and which are measured in a molding process and a curing process with a prestored weight of a normal product.

Subsequently, for a strength value of a concrete product, a strength estimation method is used where the total volume of the product is compared with a volume of cavities formed in the product. For the same, the third analysis unit 356: calculates each volume of the product after a molding process and a curing process by using image data respectively captured by the second and third image capturing devices 124 and 126 in the molding process and the curing process; calculates each volume of cavities formed in the product after the molding process and the curing process by performing analysis on a measurement result obtained by a laser that is emitted from the laser irradiating part provided in each of the second and third image capturing devices 124 and 126; and estimates a strength value of the product by a ratio between the total volume and the volume of cavities.

Subsequently, a density of a concrete product may be obtained by performing calculation using the weight and the volume of the product. Since the volume and the weight of the product are calculated as described above, a detailed description thereof will be omitted.

In addition, a density of the concrete product may be estimated by comparing the total volume of the product, and the volume of cavities formed in the concrete product. Herein, the volume of cavities formed in the concrete product is associated with the weight of the product. Therefore, correlation between the density calculated by using the volume and the weight, and a ratio between the entire volume and the volume of cavities calculated by the analysis of the measurement result using laser is obtained. Accordingly, the product density is estimated by using a ratio between the entire volume and the volume of cavities formed in the concrete product.

The above method of estimating the density of the concrete product is performed, similarly, by the third analysis unit 356. When data obtained by estimating the strength value and the density of the concrete products by using a ration between the entire volume and the volume of cavities of the concrete product is repeatedly accumulated, precise correlation between a ratio between the entire volume and the volume of cavities, and the strength value and the density of the concrete product is obtained. Therefore, the third analysis unit 356 relatively accurately estimates the strength value and the density of the concrete product by using the ratio between the entire volume and the volume of cavities of the concrete product.

Subsequently, compositions of a concrete product are analyzed through spectroscopic analysis using light. The third analysis unit 356 includes a component analysis module such as a spectrometer (not shown), and detects composition such as oil, salt, pH, bacteria, etc. which are included in the concrete product levels and that adversely affect quality of the concrete product by performing spectroscopic analysis for lasers emitted from the laser irradiating units, which are provided in the second and third image capturing devices 124 and 126, on the concrete product after a molding process and a curing process.

In addition, the third analysis unit 356 determines an optimum curing time value for each concrete product type, which will be described later.

Meanwhile, the data analysis device 350 may further include a fourth analysis unit 358, and the fourth analysis unit 358 determines whether or not equipment of production lines of respective processes, that is, the measurement unit 100 including the integrated sensor module 110 and the image capturing means 120, the mixing apparatus 20, the molding apparatus 30, the curing room 40, etc. which are used in the production lines of the concrete product are in normal operation by analyzing measurement values obtained by the measurement unit 100 .

In other words, as described above, measurement values of respective processes which are measured by the measurement unit 100 are stored in the first to fourth databases 311, 312, 313, and 314 of the memory apparatus 310, and the fourth analysis unit 358 receives and analyzes measurement values of respective processes from the first to fourth databases 311, 312, 313, and 314, and determines that an error has occurred in the corresponding measurement unit or equipment such as the mixing apparatus 20, the molding apparatus 30, the curing room 40, etc. when data such as temperature, humidity, vibration, noise, etc. measured in each process exceeds a preset error range.

In addition, when it is determined that an error has occurred in a specific measurement unit 100 or equipment, the fourth analysis unit 358 controls the display device 320 to display the error, or transmits the corresponding contents to the user terminal 400 through the wireless transmitting/receiving unit 200 so as to generate a warning signal such that the operator or manager immediately recognizes the corresponding contents.

Subsequently, the user terminal 400 belongs to the operator or manager so that the operator or manager checks and controls in real time all production processes of the concrete product. A mobile communication device such as a typical smart phone may be used for the same.

In other words, the user terminal 400 enables the operator or manager to check the progress of works in each process by receiving measurement values of each process from the measurement unit 100 which is transmitted through the wireless transmitting/receiving unit 200, and to input a process command, that is, a work control command, for each process to the main server 300 according thereto. Accordingly, the main server 300 controls each process though the control device 330.

In addition, the operator or manager checks data stored in the memory apparatus 310, particularly, data stored by the data analysis device 350, by accessing the main server 300 by using the user terminal 400.

Meanwhile, in a packing process of packing a product after a curing process, an information storage device such as an RFID chip 600 may be attached on a product individually or in a bundle. In the RFID chip 600, production information such as a production year, a name of company, a product name, dimensions, and characteristics of the product is recorded, and the production information recorded in the RFID chip 600 is stored in the main server 300 so as to enable post-management of the sold products.

Herein, the RFID chip 600 may be attached on the board 500, and the RFID chip 600 attached on the board 500 may be used for post-management of the board 500, and for identifying a position of the board 500 within the curing room 40. In other words, in a curing process, temperature, humidity, etc. within the curing room 40 are measured by the third sensor module 116 installed in the board 500. When the RFID chip 600 is used by being attaching on the board 500, a position of the board 500 within the curing room 40 may be identified. Therefore, temperature, humidity, etc. for each position within the curing room 40 are determined so as to optimize an output timing of the concrete product such as varying a curing time value for each position, that is, an optimum curing time value.

Hereinafter, examples used in each process of the integrated management system 10 according to the present invention will be described.

First, as shown in FIG. 3, the aggregate process is a process of sorting, cleaning, and drying aggregate used as raw material of a concrete product. In the aggregate process, in order to generate an optimum state of the aggregate for the production of concrete products, moisture, salt, foreign substances, and acid content levels of each aggregate are measured by using the measurement unit 100.

In order to measure moisture, salt, foreign substances, and acid content levels contained in the aggregate as above, a humidity sensor, a chloride ion sensor, an image sensor, a pH sensor, etc. are used. However, it is difficult to perform measurement by applying the sensors individually, and thus in the present invention, an integrated sensor module 110 where multiple sensors are integrated while enabling wireless communication by using a beacon technology is used so that data of the aggregate is conveniently collect.

In detail, in the aggregate process, at least one first sensor module 112 is used as the measurement unit 100, and the first sensor module 112 is employed in an integrated sensor module 110 where a humidity sensor, a chloride ion sensor, an image sensor, a pH sensor, etc. which are capable of measuring moisture, salt, foreign substances, and acid content levels contained in aggregate are integrated.

Measurement values measured by the first sensor module 112 are transmitted to at least one wireless transmitting/receiving unit 200 installed within the workplace through wireless communication, and then the wireless transmitting/receiving unit 200 transmits the received measurement values to the main server 300 and the user terminal 400 through wireless communication.

Herein, the main server 300 includes the memory apparatus 310 for storing measurement values received through the wireless transmitting/receiving unit 200, and measurement values measured in the aggregate process by the first sensor module 112 are stored in the first database 311 of the memory apparatus 310.

In addition, the operator or manager checks measurement values transmitted to the user terminal 400, and inputs a process command such as whether or not to clean the aggregate and a drying method for the aggregate so as to be transmitted to the main server 300. The control device 330 of the main server 300 receives the same, and controls and manages works in the aggregate process.

Meanwhile, when data stored in the first database 311 is repeatedly accumulated, a small amount of the aggregate is possibly required by the first sensor module 112 for precisely measuring moisture, salinity, foreign substances, acid content, etc. levels of the aggregate rather than measuring all of the aggregates. In addition, the first analysis unit 352 of the data analysis device 350 of the main server 300 may autonomously determine or estimate whether or not to clean the aggregate, a method of drying the aggregate, etc. on the basis of accumulated data of the first database 311.

Subsequently, as shown in FIG. 4, the aggregate mixing process is a process of mixing aggregate and cement by using the mixing apparatus 20. In the aggregate mixing process, weather, temperature, humidity, etc. are measured to determine amounts of aggregates, cements, and water, that is, a mixing ratio.

In other words, in the aggregate mixing process, the integrated sensor module 110 where a temperature sensor, a humidity sensor, etc. are integrated, that is, the second sensor module 114, is used to measure temperature and humidity values within the workplace. The measurement values are transmitted to the main server 300 through the wireless transmitting/receiving unit 200 so as to be stored in the second database 312 of the memory apparatus 310, at the same time, transmitted to the user terminal 400 so that the operator or manager checks the values.

The operator or manager determines a mixing ratio of aggregate, cement and water according to a concrete product type to be produced on the basis of measurement values of temperature and humidity within a workplace which are transmitted to the user terminal 400, and moisture, salt, foreign substances, and acid content levels contained in aggregate which are transmitted from the aggregate process, and transmits the determined ratio to the main server 300. Accordingly, the control device 330 of the main server 300 controls and manages works of the aggregate mixing process by receiving the same.

Meanwhile, in the above, measurement values measured in the aggregate process are used as information on moisture, salt, foreign substances, and acid content levels contained in aggregate. However, cleaning and drying processes have completed for the aggregate used in the aggregate mixing, and a chloride ion sensor, an image sensor, and a pH sensor are additionally integrated in the second sensor module 114 so as to determine a precise mixing ratio. Accordingly, information on moisture, salt, foreign substances, and acid content levels contained in aggregate may be measured again in the aggregate mixing process, and the measured information may be transmitted to the main server 300 and the user terminal 400.

In addition, in addition to measurement values measured by the second sensor module 312, information on aggregate such as the vendor or origin of the aggregate may be stored in the second database 312 of the main server 300 so as to be used as big data.

In addition, process commands input by the operator or manager through the user terminal 400 to the main server 300 are stored may be in the database where data of the corresponding process is stored, and used as reference data for determining, by the first analysis unit 352, a mixing ratio between aggregate, cement, and water according to a concrete product type to be produced on the basis of data accumulated in the first and second databases 311 and 312.

Subsequently, as shown in FIGS 5 and 6, the molding process is a process of inputting a mixture of aggregate, cement and water of the aggregate mixing process to a metal frame 32 by using an aggregate injector 22, and molding into a concrete product by applying pressure. The board 500 is provided inside the molding apparatus 30, and the mixture is injected into the metal fame 32 disposed above the board 500 so as to proceed the molding process.

In the molding process, state measurement of the board 500 input to the molding apparatus 30, vibration and pressure measurement within the molding apparatus 30, and feature measurement of a concrete product after the molding process are performed. First, a state of the board 500 is measured by the at least one first image capturing device 122 installed in the upper part of the conveyor transferring the board 500 to the molding apparatus 30.

In other words, an image of the board 500 which is captured by the first image capturing device 122 is transmitted, directly or through the transmitting/receiving unit 200, to the main server 300 and the user terminal 400. Accordingly, the operator or manager determines whether or not the board 500 is normal by checking the board 500 through the user terminal 400, and the image transmitted to the main server 300 is stored in the third database 313.

Herein, in order to precisely measure a shape of the board 500, the laser irradiating part included in the first image capturing device 122 may be used. When the laser irradiating part is used, the measurement values are stored in the third database of the main server 300. The second analysis unit 354 of the data analysis device 350 analyzes measurement values stored in the third database 313, and calculates a precise dimension of the board 500. Therefore, the shape of the board 500 is measured precisely.

In addition, when data related to shapes of the boards 500 is sufficiently accumulated in the third database 313, the second analysis unit 354 autonomously determines whether or not the board 500 is normal by using data related to shapes of the board 500 which is newly input to the third database 313.

Subsequently, vibration and pressure values within the molding apparatus 30 are measured by the integrated sensor module 110 installed in the board 500, that is, the third sensor module 116. The third sensor module 116 is configured to measure vibration and pressure values in the molding process, temperature and humidity values in the curing process, and a weight of the concrete product after the molding and curing processes by being integrated with a vibration sensor, a pressure sensor, a temperature sensor, a humidity sensor, a weight sensor, a position sensor, etc.

In addition, when a position sensor is included in the third sensor module 116, even though the above-described RFID chip 600 is not attached on the board 500, a position of the board 500 within the curing room 40 in the curing process is identified, and thus temperature and humidity values at a specific position within the curing room 40 are determined.

Herein, composite materials including steel, plastic, etc. may be used as material of the board 500. For a case where the third sensor module 116 or RFID chip 600 is difficult to be attached on the board 500 according to the material of the board 500, as shown in FIG. 9, a bar 510 of epoxy or plastic material is attached on the side of the board 500, and then third sensor module 116 or RFID chip 600 is installed in the side of the bar 510.

Meanwhile, measurement values of vibration and pressure within the molding apparatus 30 which are measured by the third sensor module 116 are transmitted, directly or through the wireless transmitting/receiving unit 200, to the main server 300 and the user terminal 400 through wireless communication. Accordingly, the operator or manager checks vibration and pressure values within the molding apparatus 30 through the user terminal 400, and controls vibration and pressure values within the molding apparatus 30 through the control device 330 of the main server 300 when an error is present.

In addition, measurement values of vibration and pressure are stored in the third database 313 of the main server 300, and the measurement values stored in the third database 313 are analyzed by the third analysis unit 356 of the data analysis device 350 so as to determine and estimate optimum vibration and pressure values within the molding apparatus 30 according to a concrete product type.

Subsequently, a feature of the concrete product after a molding process is measured by at least one second image capturing device 124 installed on the upper part of the conveyor transferring the concrete product after a molding process and by the third sensor module 116 installed in the board 500. Herein, an image of the concrete product after the molding process is captured by the second image capturing device 124, and an appearance, a cavity ratio, a weight, etc. of the concrete product after the molding process are measured by using a laser emitted from the laser irradiating part included in the second image capturing device 124 and by using the third sensor module 116. Accordingly, a density, a strength value, and compositions of the concrete product are identified by using the same.

In detail, as shown in FIG. 8, the concrete product after a molding process is output from the molding apparatus 30 by being disposed on the board 500 and transferred to the curing room 40 through the conveyor. Herein, when transferring through the conveyor, an image of the product is captured by the at least one second image capturing device 124 including the laser irradiating part, and the captured image and a measurement result by the laser irradiating part are transmitted, directly or through the wireless transmitting/receiving unit 200, to the main server 300 through wireless communication so as to be stored in the third database 313.

Herein, the image of the concrete product after the molding process which is captured by the second image capturing device 124 may be also transmitted to the user terminal 400 so that the operator or manager determines whether or not a defect is present in an appearance of the concrete product through the image transmitted to the user terminal 400.

In addition, the third analysis unit 356 of the main server 300 analyzes a density, a strength value, compositions, etc. of the concrete product after a molding process by using data stored in the third database 313. Herein, first, a density of the concrete product may be calculated by a volume of the concrete product which is obtained from an image captured by the second image capturing device 124, and a weight of the concrete product which is measured through the third sensor module 116.

Subsequently, a strength value of the concrete product after a molding process may be estimated by a ratio between the volume of the concrete product and a volume of cavities formed in the concrete product. Herein, the volume of cavities of the concrete product may be measured by using a laser irradiating the concrete product by the laser irradiating part included in the second image capturing device 124.

In addition, as described above, when data related to a ratio between a volume of the concrete product and a volume of cavities formed in the concrete product, a strength value of the concrete product in association thereto, and a density are sufficiently accumulated to form big data, and correlations between a strength value and a ratio between the volume of the concrete product and the volume of cavities formed in the concrete product, and between a density and a ratio between the volume of the concrete product and the volume of cavities formed in the concrete product are precisely calculated. Accordingly, the third analysis unit 356 accurately estimates the strength value and density of the concrete product by only calculating the volume of cavities of the concrete product.

Subsequently, composition analysis of the concrete product is performed by using a laser irradiating the concrete product by the laser irradiating part. Herein, the third analysis unit 356 includes a spectral analysis module, and analyzes compositions included in the concrete product, particularly, hazardous compositions such as salt, oil, bacteria, etc. through spectroscopic analysis using laser.

Herein, in addition to the laser irradiating part, an additional infrared laser generator may be installed for spectroscopic analysis, and a method of detecting the above compositions through spectroscopic analysis is already known and is not intended to be claimed in the present invention, and thus a detailed description thereof will be omitted.

Meanwhile, as above, results analyzed by the data analysis device 350 by using a state of the board 500 input to the molding apparatus 30 and which is measured in the molding process, and a state of the concrete product after vibration and pressure and the molding process within the molding apparatus 30 are all separately stored in the fifth database 315 of the memory apparatus 310 so as to be used for learning using big data performed by the main server 300.

Subsequently, as shown in FIG. 6, the curing process is a process of inputting the molded concrete product after the molding process to the curing room 40, and curing the concrete product for a predetermined time under constant temperature and humidity. Herein, the concrete product disposed on the board 500 output from the molding apparatus 30 is transferred as it is to the curing room 40 so as to proceed the curing process.

In the curing process, temperature and humidity values within the curing room 40 are measured, and then a state and a feature of the concrete product after curing are measured. Herein, first, the temperature and humidity values within the curing room 40 are measured by the third sensor module 116 installed in the board 500.

In other words, as described above, the third sensor module 116 includes a temperature sensor and a humidity sensor to measure temperature and humidity values within the curing room 40. The measurement values are transmitted, directly or through the wireless transmitting/receiving unit 200, to the main server 300 and the user terminal 400, and the measurement values transmitted to the main server 300 are stored in the fourth database 314 of the memory apparatus 310. In addition, the measurement values transmitted to the user terminal 400 are displayed to the operator or manager so that the operator or manager determines a process command, that is, a curing time value.

Herein, a process command for a curing time value is input by the operator or manager through the user terminal 400 and transmitted to the control device 330 of the main server 300, and then the control device 330 controls a curing time value according to temperature and humidity values within the curing room 40 by using a method of controlling a timer included in the curing room 40.

In addition, the third analysis 356 of the main server 300 analyzes a curing time value according to temperature and humidity conditions within the curing room 40 by synthetically analyzing temperature and humidity conditions within the curing room 40, process commands of the operator or manager for curing time values according thereto, and states and features of the concrete products after the curing process, which will be described later, which are stored in the fourth database 314. An optimum curing time value according to temperature and humidity conditions is determined and estimated by repeating the above analysis.

Subsequently, a state and a feature of the concrete product after the curing process are measured by the at least one third image capturing device 126 installed in the upper part of the conveyor transferring the cured concrete product in the curing process, and by the third sensor module 116. Herein, an image of the concrete product after the curing process is captured by the third image capturing device 126, and spectroscopic analysis using a laser irradiating the concrete product is performed by the laser irradiating part included in the third image capturing device 126. In addition, a weight of the concrete product after the curing process is measured by the third sensor module 116 installed in the board 500. All of the above measurement values are stored in the fourth database 314 of the main server 300, and data stored in the fourth database 314 is analyzed by the third analysis unit 356 so as to analyze a density, a strength value, compositions, etc. of the concrete product after the curing process.

A method of measuring a state and a feature of the concrete product after the curing process and an analysis method using the measurement values are identical to those of the molding process, and thus a detailed description thereof will be omitted.

In addition, the third analysis unit 356 of the main server 300 calculates a rate of change by comparing feature data of the concrete product after the molding process such as a size, a density, a strength value, compositions, etc. and feature data of the concrete product after the curing process, and stores the resulting rate of change in the fifth database 315 to form big data so as to be reflected when calculating an optimum condition for a production process of a concrete product afterward.

Meanwhile, the memory apparatus 310 of the main server 300 may further include a sixth database 316, and data in association with the optimum conditions among analysis results obtained from the data analysis device 350 and stored in the fifth database 315 are stored the sixth database 316.

In other words, as described above, the optimum data to produce the best concrete product, among the data for each process which is stored in the fifth database 315 and analyzed by the data analysis device 350, is stored in the sixth database 316, and thus in the production process of the concrete product, product production is performed by applying the optimal data stored in the sixth database 316 so as to simplify the overall production processes and to automatically produce the concrete products with the best quality.

Herein, the optimum data stored in the sixth database 316 includes optimum data of all conditions that are applied to all production processes of the concrete product such as a ratio between aggregate and cement, a moisture level, temperature, humidity, vibration strength, curing temperature, etc.

Subsequently, the packing process is a process of separating the concrete product after the curing process from the board 500, and packing individually or bundled. In the packing process, attaching the RFID chip 600 is performed for post-management of the concrete product, and inspection for the board 500 is performed.

First, the RFID chip 600 is attached on the completed concrete product individually or bundled, and production information on features such as a production date, a name of company, a product name, dimensions and density, a strength value, compositions, etc. is recorded in the RFID chip 600. The production information of the concrete product recorded in the RFID chip 600 is stored in the memory apparatus 310 of the main server 300 so as to enable post-management of the concrete product and overall management of the production history and sales history.

Subsequently, inspection of the board 500 is performed for managing the board 500 to prevent quality degradation of the concrete product due to quality degradation of the board 50. Deformation, surface scratches and corrosion of the board 500 are inspected through visual inspection and flatness inspection, etc.

When a defect is detected in the inspection process as described above, the defect of the board 500 is repaired by using a method such as surface processing, cleaning, coating, so as to prevent quality degradation of the concrete product due to the detect of the board 500.

Accordingly, as described above, by the integrated management system 10 for production history of a concrete product according to the present invention, problems that may occur in each production process of the concrete product are identified in real time by storing information measured and collected in each process, at the same time, enabling the manager and the operator to check the information through wired/wireless communication. In addition, the manager and the operator issue a process command in real time according the information, and thus building an effective process line, at the same time, minimizing the defect rate can be obtained. Further, information measured and collected in all production processes of the concrete product is stored in real time so as to form big data, and autonomous learning is performed through comparison and analysis using the big data so as to estimate and determine an error or abnormal situation occurring in production processes. Accordingly, product quality and productivity can be continuously improved. In addition, an RFID chip 600 including production history information of the concrete product is attached individually or bundled in the packing process, and thus post-management of the concrete product that has been shipped or delivered can be available.

The above-described examples are described with respect to the most preferred examples of the present invention, but are not limited to the above embodiments, the invention, in fact, is solely defined by the appended claims.

### [Industrial applicability]

The present invention relates to an integrated management system for production history of a concrete product. More particularly, the present invention relates to an integrated management system for production history of a concrete product, the system being capable of: dividing all production processes for from aggregate that is raw material to a complete concrete product such as concrete blocks; providing information required for each process and measurement values to the manager and the operator by using generic technologies such as ICT, IoT, AI, etc. so that the manager and the operator reflect them in the production processes in real time; and integrally managing and analyzing the information and the measurement values so as to continuously produce of concrete products having high quality.

## Claims

1. An integrated management system (10) for managing production history of a concrete product, wherein the system is adapted to integrally manage all production processes of the concrete product which include an aggregate process, an aggregate mixing process, a molding process, a curing process, and a packing process, the system comprising:
a measurement unit (100) for measuring a state of a concrete product and a concrete molding board (500), for which the aggregate process, molding process, or curing process is performed, or a state of a production line in each process;
a wireless transmitting/receiving unit (200) for receiving measurement values measured by the measurement unit (100), and for transmitting the received measurement values to a main server (300) and a user terminal (400);
a main server (300) for storing the measurement values received through the wireless transmitting/receiving unit (200) and production information of the concrete product, and for controlling each production process according to the measurement values, at the same time, for determining whether or not the production line is in normal operation; and
a user terminal (400) for receiving the measurement values of each production process through communication with the wireless transmitting/receiving unit (200) and the main server (300), and for transmitting a control command of each production process to the main server (300);
wherein the main server (300) includes:
a memory apparatus (310) for receiving the measurement values measured by the measurement unit (100) and the production information of the concrete product, and for storing the received measurement values and the production information;
a display device (320) for receiving the measurement values measured by the measurement unit (100), a process command in each process input through the user terminal (400), and data analyzed in a data analysis device (350) and for displaying the received measurement values, the input process command, and the analyzed data;
a control device (330) for controlling works performed in each production process;
a communication device (340) for performing communication with the wireless transmitting/receiving unit (200) and the user terminal (400); and
a data analysis device (350) for analyzing the measurement values measured by the measurement unit (100);
**characterized in that** the measurement unit (100) includes an integrated sensor module (110) where multiple independent sensors are integrated by using Beacon technology;
wherein the integrated sensor module (110) includes:
a first sensor module (112) for measuring compositions contained in aggregate in the aggregate process;
a second sensor module (114) for measuring a state within a mixing apparatus in the aggregate mixing process; and
a third sensor module (116) installed in a concrete molding board (500), for measuring an internal condition of a molding apparatus in the molding process and an internal condition of a curing room in the curing process, and for measuring a weight of the concrete product after the molding process and the curing process;
and **in that** the measurement unit (100) further includes:
a first image capturing device (122) for capturing an image of a concrete molding board (500) input to a molding apparatus in the molding process;
a second image capturing device (124) for capturing an image of the concrete product output from the molding apparatus; and
a third image capturing device (126) for capturing an image of the concrete product output after the curing process;
and **in that** the memory apparatus (310) includes:
a first database (311) for storing measurement values measured in the aggregate process;
a second database (312) for storing measurement values measured in the aggregate mixing process;
a third database (313) for storing measurement values measured in the molding process;
a fourth database (314) for storing measurement values measured in the curing process; and
a fifth database (315) for storing data analyzed by the data analysis device (350).

2. The system of claim 1, wherein the first sensor module (112) includes a humidity sensor, a chloride ion sensor, an image sensor, and a pH sensor.

3. The system of claim 1, wherein the second sensor module (114) includes a temperature sensor and a humidity sensor.

4. The system of claim 1, wherein the third sensor module (116) includes a vibration sensor, a pressure sensor, a temperature sensor, a humidity sensor, a weight sensor, and a position sensor.

5. The system of claim 1, wherein each of the first to third image capturing devices (122,124,126) includes a laser irradiating part.

6. The system of claim 1, wherein the memory apparatus (310) further includes: a sixth database (316) for storing optimum data selected from data stored in the fifth database (315) .

7. The system of claim 1, wherein the data analysis device (350) includes:
a first analysis unit (352) for analyzing data stored in the first and second databases (311,312) so as to determine works of the aggregate process and the aggregate mixing process;
a second analysis unit (354) for analyzing data stored in the third and fourth databases (313,314) so as to determine whether or not a concrete molding board (500) is normal; and
a third analysis unit (356) for analyzing data stored in the third and fourth databases (313,314) so as to determine whether or not the concrete product after the molding process and the curing process has a defect.

8. The system of claim 7, wherein the data analysis device (350) further includes: a fourth analysis unit (358) for analyzing the measurement values measured by the measurement unit (100) so as to determine whether or not an error occurs in a production line of each production process.

9. The system of claim 7, wherein the third analysis unit (356) is adapted to determine whether or not the concrete product has a defect by analyzing a size, a strength value, a density, and compositions of the concrete product.

10. The system of claim 9, wherein the strength value and the density of the concrete product are estimated by using a ratio between a total volume of the concrete product and a volume of cavities formed in the concrete product.

11. The system of claim 9, wherein the compositions of the concrete product are analyzed by performing spectroscopic analysis using a laser irradiating the concrete product.

12. The system of claim 1, further comprising: an RFID chip (600) attached on the concrete product in the packing process, wherein production information of the concrete product, which is stored in the RFID chip (600), is stored in the main server (300).

## Patentansprüche

1. Integriertes Managementsystem (10) zum Verwalten einer Produktionshistorie eines Betonprodukts, wobei das System angepasst ist, um integral alle Produktionsprozesse des Betonprodukts zu verwalten, die einen Aggregatprozess, einen Aggregatmischprozess, einen Formprozess, einen Aushärtungsprozess und einen Verpackungsprozess aufweisen, wobei das System aufweist:
eine Messeinheit (100) zum Messen eines Zustands eines Betonprodukts und einer Betonformplatte (500), für die der Aggregatprozess, der Formprozess oder der Aushärtungsprozess durchgeführt wird, oder eines Zustandes einer Produktionslinie in jedem Prozess,
eine drahtlose Sende-/Empfangseinheit (200) zum Empfangen von Messwerten, die von der Messeinheit (100) gemessen werden, und zum Übermitteln der empfangenen Messwerte an einen Hauptserver (300) und ein Benutzerterminal (400),
einen Hauptserver (300) zum Speichern der Messwerte, die über die drahtlose Sende-/Empfangseinheit (200) empfangen werden, und von Produktionsinformationen des Betonprodukts, und zum Steuern jedes Produktionsprozesses gemäß den Messwerten, und gleichzeitig zum Ermitteln, ob die Produktionslinie im Normalbetrieb ist oder nicht, und
ein Benutzerendgerät (400) zum Empfangen der Messwerte jedes Produktionsprozesses durch Kommunikation mit der drahtlosen Sende-/Empfangseinheit (200) und dem Hauptserver (300), und zum Übermitteln eines Steuerbefehls für jeden Produktionsprozess zum Hauptserver (300),
wobei der Hauptserver (300) aufweist:
eine Speichervorrichtung (310) zum Empfangen der von der Messeinheit (100) gemessenen Messwerte und der Produktionsinformationen des Betonprodukts und zum Speichern der empfangenen Messwerte und der Produktionsinformationen,
eine Anzeigevorrichtung (320) zum Empfangen der von der Messeinheit (100) gemessenen Messwerte, eines durch das Benutzerendgerät (400) eingegebenen Prozessbefehls in jedem Prozess und von Daten, die in einer Datenanalysevorrichtung (350) analysiert werden, und zum Anzeigen der empfangenen Messwerte, des eingegebenen Prozessbefehls und der analysierten Daten,
eine Steuervorrichtung (330) zum Steuern von Arbeiten, die in jedem Produktionsprozess ausgeführt werden,
eine Kommunikationseinrichtung (340) zum Ausführen von Kommunikation mit der drahtlosen Sende-/Empfangseinheit (200) und mit dem Benutzerendgerät (400), und
eine Datenanalysevorrichtung (350) zum Analysieren der von der Messeinheit (100) gemessenen Messwerte,
**dadurch gekennzeichnet, dass**
die Messeinheit (100) aufweist ein integriertes Sensormodul (110), in dem mehrere unabhängige Sensoren unter Verwendung der Beacon-Technologie integriert sind, wobei das integrierte Sensormodul (110) aufweist:
ein erstes Sensormodul (112) zum Messen von Zusammensetzungen, die im Aggregat im Aggregatprozess enthalten sind,
ein zweites Sensormodul (114) zum Messen eines Zustands innerhalb einer Mischvorrichtung im Aggregatmischprozess, und
ein drittes Sensormodul (116), das in einer Betonformplatte (500) installiert ist, zum Messen eines internen Zustands einer Formvorrichtung im Formprozess und eines internen Zustands eines Aushärteraums im Aushärteprozess, und zum Messen eines Gewichts des Betonprodukts nach dem Formprozess und dem Aushärtungsprozess,
**und dadurch, dass** die Messeinheit (100) ferner aufweist:
eine erste Bilderfassungsvorrichtung (122) zum Erfassen eines Bildes einer Betonformplatte (500), die in eine Formvorrichtung im Formgebungsprozess eingebracht wird,
eine zweite Bildaufnahmevorrichtung (124) zum Aufnehmen eines Bildes des Betonprodukts, das von der Formvorrichtung ausgegebenen wird, und
eine dritte Bilderfassungsvorrichtung (126) zum Aufnehmen eines Bildes des Betonprodukts, das nach dem Aushärtungsprozess ausgegeben wird,
**und dadurch, dass** die Speichervorrichtung (310) aufweist:
eine erste Datenbank (311) zum Speichern von Messwerten, die im Aggregatprozess gemessen werden,
eine zweite Datenbank (312) zum Speichern von Messwerten, die in dem Aggregatmischprozess gemessen werden,
eine dritte Datenbank (313) zum Speichern von Messwerten, die in dem Formprozess gemessen werden,
eine vierte Datenbank (314) zum Speichern von Messwerten, die während des Aushärtungsprozesses gemessen werden, und
eine fünfte Datenbank (315) zum Speichern von Daten, die von dem Datenanalysegerät (350) analysiert werden.

2. System nach Anspruch 1, wobei das erste Sensormodul (112) aufweist einen Feuchtigkeitssensor, einen Chloridionensensor, einen Bildsensor und einen pH-Sensor.

3. System nach Anspruch 1, wobei das zweite Sensormodul (114) aufweist einen Temperatursensor und einen Feuchtigkeitssensor.

4. System nach Anspruch 1, wobei das dritte Sensormodul (116) aufweist einen Vibrationssensor, einen Drucksensor, einen Temperatursensor, einen Feuchtigkeitssensor, einen Gewichtssensor und einen Positionssensor.

5. System nach Anspruch 1, wobei jede der ersten bis dritten Bilderfassungsvorrichtungen (122, 124, 126) ein Laserstrahlelement aufweist.

6. System nach Anspruch 1, wobei die Speichervorrichtung (310) ferner aufweist: eine sechste Datenbank (316) zum Speichern optimaler Daten, die aus den in der fünften Datenbank (315) gespeicherten Daten ausgewählt werden.

7. System nach Anspruch 1, wobei die Datenanalysevorrichtung (350) aufweist:
eine erste Analyseeinheit (352) zum Analysieren von in der ersten und der zweiten Datenbank (311, 312) gespeicherten Daten, um Arbeiten des Aggregatprozesses und des Aggregatmischprozesses zu ermitteln,
eine zweite Analyseeinheit (354) zum Analysieren von in der dritten und der vierten Datenbank (313, 314) gespeicherten Daten, um zu ermitteln, ob eine Betonformplatte (500) normal ist oder nicht, und
eine dritte Analyseeinheit (356) zum Analysieren von in der dritten und der vierten Datenbank (313, 314) gespeicherten Daten, um zu ermitteln, ob das Betonprodukt nach dem Formprozess und dem Aushärtungsprozess einen Fehler aufweist oder nicht.

8. System nach Anspruch 7, wobei die Datenanalysevorrichtung (350) ferner aufweist: eine vierte Analyseeinheit (358) zum Analysieren der von der Messeinheit (100) gemessenen Messwerte, um zu ermitteln, ob in einer Produktionslinie jedes Produktionsprozesses ein Fehler auftritt oder nicht.

9. System nach Anspruch 7, wobei die dritte Analyseeinheit (356) angepasst ist, um zu ermitteln, ob das Betonprodukt einen Fehler aufweist oder nicht durch Analysieren einer Größe, eines Festigkeitswerts, einer Dichte und von Zusammensetzungen des Betonprodukts.

10. System nach Anspruch 9, wobei der Festigkeitswert und die Dichte des Betonprodukts unter Verwendung eines Verhältnisses zwischen einem Gesamtvolumen des Betonprodukts und einem Volumen von im Betonprodukt gebildeten Hohlräumen berechnet werden.

11. System nach Anspruch 9, wobei die Zusammensetzungen des Betonprodukts analysiert werden durch Ausführen einer spektroskopischen Analyse unter Verwendung eines Lasers, der das Betonprodukt bestrahlt.

12. System nach Anspruch 1, das ferner aufweist: einen RFID-Chip (600), der während des Verpackungsprozesses an dem Betonprodukt angebracht ist, wobei Produktionsinformationen des Betonprodukts, die auf dem RFID-Chip (600) gespeichert werden, in dem Hauptserver (300) gespeichert werden.

## Revendications

1. Système de gestion intégré (10) pour gérer l'historique de production d'un produit en béton, dans lequel le système est adapté pour gérer intégralement tous les processus de production du produit en béton qui comprennent un processus d'agrégat, un processus de mélange d'agrégats, un processus de moulage, un processus de durcissement et un processus d'emballage, le système comprenant :
une unité de mesure (100) pour mesurer un état d'un produit en béton et un panneau de moulage en béton (500), pour lequel le processus d'agrégat, le processus de moulage ou le processus de durcissement est effectué, ou un état d'une chaîne de production dans chaque processus ;
une unité d'émission/réception sans fil (200) pour recevoir des valeurs de mesure mesurées par l'unité de mesure (100), et pour transmettre les valeurs de mesure reçues à un serveur principal (300) et à un terminal utilisateur (400) ;
un serveur principal (300) pour stocker les valeurs de mesure reçues par l'intermédiaire de l'unité d'émission/réception sans fil (200) et des informations de production du produit en béton, et pour commander chaque processus de production en fonction des valeurs de mesure, en même temps, pour déterminer si la chaîne de production est en fonctionnement normal ou non ; et
un terminal utilisateur (400) pour recevoir les valeurs de mesure de chaque processus de production par communication avec l'unité d'émission/réception sans fil (200) et le serveur principal (300), et pour transmettre une commande de contrôle de chaque processus de production au serveur principal (300) ;
dans lequel le serveur principal (300) comprend :
un appareil de mémoire (310) pour recevoir les valeurs de mesure mesurées par l'unité de mesure (100) et les informations de production du produit en béton, et pour stocker les valeurs de mesure reçues et les informations de production ;
un dispositif d'affichage (320) pour recevoir les valeurs de mesure mesurées par l'unité de mesure (100), une commande de processus dans chaque entrée de processus par l'intermédiaire du terminal utilisateur (400), et des données analysées dans un dispositif d'analyse de données (350) et pour afficher les valeurs de mesure reçues, la commande de processus d'entrée et les données analysées ;
un dispositif de commande (330) pour commander les travaux effectués dans chaque processus de production ;
un dispositif de communication (340) pour effectuer une communication avec l'unité d'émission/réception sans fil (200) et le terminal utilisateur (400) ; et
un dispositif d'analyse de données (350) pour analyser les valeurs de mesure mesurées par l'unité de mesure (100) ;
**caractérisé en ce que** l'unité de mesure (100) comprend un module de capteur intégré (110) où de multiples capteurs indépendants sont intégrés en utilisant la technologie beacon ;
dans lequel le module de capteur intégré (110) comprend :
un premier module de capteur (112) pour mesurer les compositions contenues dans l'agrégat dans le processus d'agrégat ;
un deuxième module de capteur (114) pour mesurer un état à l'intérieur d'un appareil de mélange dans le processus de mélange d'agrégats ; et
un troisième module de capteur (116) installé dans un panneau de moulage en béton (500), pour mesurer un état interne d'un appareil de moulage dans le processus de moulage et un état interne d'une salle de durcissement dans le processus de durcissement, et pour mesurer un poids du produit en béton après le processus de moulage et le processus de durcissement ;
et **en ce que** l'unité de commande (100) comprend en outre :
un premier dispositif de capture d'images (122) pour capturer une image d'entrée d'un panneau de moulage en béton (500) dans un appareil de moulage dans le processus de moulage ;
un deuxième dispositif de capture d'images (124) pour capturer une image de la sortie d'un produit en béton de l'appareil de moulage ; et un troisième dispositif de capture d'images (126) pour capturer une image de la sortie du produit en béton après le processus de durcissement ;
et **en ce que** l'appareil de mémoire (310) comprend :
une première base de données (311) pour stocker des valeurs de mesure mesurées dans le processus d'agrégat ;
une deuxième base de données (312) pour stocker des valeurs de mesure mesurées dans le processus de mélange d'agrégats ;
une troisième base de données (313) pour stocker des valeurs de mesure mesurées dans le processus de moulage ;
une quatrième base de données (314) pour stocker des valeurs de mesure mesurées dans le processus de durcissement ; et
une cinquième base de données (315) pour stocker des données analysées par le dispositif d'analyse de données (350).

2. Système selon la revendication 1, dans lequel le premier module de capteur (112) comprend un capteur d'humidité, un capteur d'ions de chlorure, un capteur d'images et un capteur de pH.

3. Système selon la revendication 1, dans lequel le deuxième module de capteur (114) comprend un capteur de température et un capteur d'humidité.

4. Système selon la revendication 1, dans lequel le troisième module de capteur (116) comprend un capteur de vibration, un capteur de pression, un capteur de température, un capteur d'humidité, un capteur de poids et un capteur de position.

5. Système selon la revendication 1, dans lequel chacun des premier à troisième dispositifs de capture d'images (122, 124, 126) comprend une partie d'irradiation par laser.

6. Système selon la revendication 1, dans lequel l'appareil de mémoire (310) comprend en outre : une sixième base de données (316) pour stocker des données optimales sélectionnées parmi des données stockées dans la cinquième base de données (315).

7. Système selon la revendication 1, dans lequel le dispositif d'analyse de données (350) comprend :
une première unité d'analyse (352) pour analyser des données stockées dans les première et deuxième bases de données (311, 312) afin de déterminer des travaux du processus d'agrégat et du processus de mélange d'agrégats ;
une deuxième unité d'analyse (354) pour analyser des données stockées dans les troisième et quatrième bases de données (313, 314) afin de déterminer si oui ou non un panneau de moulage en béton (500) est normal ; et
une troisième unité d'analyse (356) pour analyser les données stockées dans les troisième et quatrième bases de données (313, 314) de manière à déterminer si le produit en béton après le processus de moulage et le processus de durcissement présente ou non un défaut.

8. Système selon la revendication 7, dans lequel le dispositif d'analyse de données (350) comprend en outre : une quatrième unité d'analyse (358) pour analyser les valeurs de mesure mesurées par l'unité de mesure (100) de manière à déterminer si oui ou non une erreur se produit dans une ligne de production de chaque processus de production.

9. Système selon la revendication 7, dans lequel la troisième unité d'analyse (356) est adaptée pour déterminer si oui ou non le produit en béton a un défaut en analysant une taille, une valeur de résistance, une densité et des compositions du produit en béton.

10. Système selon la revendication 9, dans lequel la valeur de résistance et la densité du produit en béton sont estimées en utilisant un rapport entre un volume total du produit en béton et un volume de cavités formées dans le produit en béton.

11. Système selon la revendication 9, dans lequel les compositions du produit en béton sont analysées en effectuant une analyse spectroscopique en utilisant un laser irradiant le produit en béton.

12. Système selon la revendication 1, comprenant en outre : une puce RFID (600) fixée sur le produit en béton dans le processus d'emballage, dans lequel les informations de production du produit en béton, qui sont stockées dans la puce RFID (600), sont stockées dans le serveur principal (300).
